# EUROPEAN PATENT APPLICATION

(11) **EP 3 654 442 A1**
(43) Date of publication of application: **20.05.2020**
(21) Application number: 18206216.6
(22) Date of filing: 14.11.2018
(51) Int. Cl.: H01M 10/48, H01M 10/613, H01M 10/6567

(54) **METHODS OF IDENTIFYING AN OVERHEATING EVENT IN A BATTERY CELL SINGLE-PHASE IMMERSION COOLING SYSTEM**

(71) Applicant: 3M Innovative Properties Company, Saint Paul, MN 55133-3427 (US)
(72) Inventor: Schumacher, Knut, 41472 Neuss (DE); Vent, Albert, 52249 Eschweiler (DE); Stibe, Dieter Otmar, 44807 Bochum (DE)
(74) Representative: Mössner, Brigitte

(57) **Abstract**

Method of identifying an overheating event in a battery cell single-phase immersion cooling system (90) comprising a cooling fluid (40) in a closed container (50) having a fixed volume, one or more battery cells (10) immersed in the cooling fluid, and a pressure sensor (130) for sensing a pressure in the closed container.

The method comprises the steps of
a) determining an instant pressure prevailing in the closed container using the pressure sensor;
b) deriving from the instant pressure an instant maximum temperature prevailing anywhere in the closed container; and
c) generating a signal when the instant maximum temperature exceeds a predetermined threshold temperature.

## Description

The invention relates to cooling systems for batteries, more specifically to single-phase immersion cooling systems for batteries of electrically propelled vehicles, also referred to as electric vehicles ("EV"). In particular, it relates to methods for detection of overheating events, such as thermal runaway events, in such cooling systems. It also relates to battery management systems performing such methods, and to data storage devices comprising software to perform such methods.

A thermal runaway in a module of a lithium-ion battery of an electric vehicle is an uncontrolled rise in temperature of a battery cell in a battery module, due to overly high electrical currents flowing within the battery cell, often as a result of a failure of the separator of a battery cell and a subsequent internal short circuit between anode and cathode of the battery cell. The overheated battery cell heats up adjacent cells within a battery module and causes internal short circuits in those adjacent cells, so that the thermal runaway can propagate from cell to cell within the module and eventually from module to module within the battery.

It is important to detect a thermal runaway event early because early detection gives more time to stop the event or more time for the passengers of an EV to leave the vehicle. Traditionally this is done by installing a temperature sensor in the cooling system or on an element of the battery. U.S. patent application US 2014/0335381 A1 describes such a system for battery thermal management comprising a battery cell at least partially submerged within a liquid contained within a battery case; a pump to circulate the liquid from the battery case to a cooling unit and back to the battery case; and at least one temperature sensor to sense a temperature of the battery cell. The temperature of the battery cell is compared with a maximum threshold temperature, and a cooling unit is activated when the temperature of the battery cell is above the maximum threshold temperature.

The Chinese patent application CN 107702801 describes a thermal runaway early warning device for a lithium ion battery during charge and discharge. The device includes an infrared temperature sensor to determine the battery temperature and performs early warning before a battery charge/discharge thermal runaway.

A Chinese utility model, published as CN 204407448 U, mentions a temperature control system of an immersion-type battery box, wherein a temperature sensor is used for detecting the temperature of the battery pack.

Since overheating events such as thermal runaway events can start in any battery cell within a battery module, and in any module within a battery module assembly, an early detection of such overheating events requires many temperature sensors, distributed within a battery module, and distributed within a module assembly. Ideally, the temperature of each battery cell would be monitored to detect early when any one of the cells overheats. This, however, is not practical, because the infrastructure necessary to accommodate so many temperature sensors, to supply them with power, and to collect and process their signals is quite complex and consumes much space and power.

The present disclosure attempts to address these problems. It provides a method of identifying an overheating event in a battery cell single-phase immersion cooling system comprising a cooling fluid in a closed container having a fixed volume, one or more battery cells immersed in the cooling fluid, and a pressure sensor for sensing a pressure in the closed container, the method comprising the steps of
a) determining an instant pressure prevailing in the closed container using the pressure sensor;
b) deriving from the instant pressure an instant maximum temperature prevailing anywhere in the closed container; and
c) generating a signal when the instant maximum temperature exceeds a predetermined threshold temperature.

In a closed single-phase immersion cooling system in thermal equilibrium, the pressure is equal everywhere. In a constant volume, pressure of a fluid rises with temperature, and a unique functional relation between pressure and temperature exists. Once this relation is determined for a given fluid and a given volume, the temperature of the fluid can be derived from the pressure.

In a single-phase immersion cooling system, the cooling fluid exists as a liquid only. In this case, the temperature of the cooling fluid can be derived from the pressure, provided that the cooling system is closed and has a fixed volume.

The pressure in the closed single-phase immersion cooling system is not dependent on the average temperature of the elements forming the system (such as tubes, cooling fluid and battery cells immersed in the cooling fluid), but on the temperature of the hottest element of the system, because the pressure at the hottest element determines the pressure in the entire container. Any change of pressure at the hottest element propagates within the closed container virtually without delay. Hence, when one of many battery cells overheats, the pressure in the system will rise everywhere instantaneously. Using the known relation between pressure and temperature of the cooling fluid, the temperature of the hottest element anywhere in the closed cooling system can be determined by measuring the pressure in the closed cooling system.

A thermal runaway event generates temperatures in a battery cell that are far higher than any reasonable operating temperature of the cell or of a battery module. When the temperature of the hottest element in the cooling system rises over a predetermined threshold temperature, this is an indication of the start of a thermal runaway event.

A change in pressure propagates instantaneously within the entire cooling system and can therefore be detected by a distant pressure sensor much faster than a change in temperature can be detected by a temperature sensor at a certain distance from the overheating battery cell. Determining the temperature of the hottest element in a cooling system by using a pressure sensor can thus provide an earlier warning of the start of a thermal runaway event than if a temperature sensor were used.

An overheating event in any one of the battery cells in the closed cooling system will result in a sudden rise to a considerably higher pressure in the entire system. A single pressure sensor can therefore determine if an overheating event occurred anywhere in the closed cooling system. A single pressure sensor is easier to accommodate, easier to supply with power and easier to read out than a number of temperature sensors would be.

An electric vehicle (EV) is propelled by electrical energy stored in a rechargeable battery system on board the vehicle. The battery system is typically formed by a plurality of battery modules, each of which has a housing containing a plurality of battery cells. To obtain the desired voltage and currents, the cells are electrically connected parallel and in series. A typical battery module further has bus bars to connect battery cells with each other, electrical contacts and a cooling mechanism. A battery cell comprises a cathode, an anode, and an electrolyte. In common lithium-ion batteries lithium ions move from the negative electrode through the electrolyte to the positive electrode during discharge and back when charging. Several battery modules may be arranged in battery packs, a few of which form the battery system of a typical electric vehicle.

Battery cells and battery modules heat up when they are charged and when they are discharged. To optimize the battery system capacity, it is desirable to keep the temperature of cells and modules within a working range, which depends inter alia on the materials used for the anode, cathode and electrolyte. For some typical lithium-ion cells and modules, a preferred working temperature range is the range between +15°C and +35°C. Under load, or when charged, uncooled modules may become much hotter than 35°C, and cooling is required to keep their temperature within the working range.

In a battery cell single-phase immersion cooling system, battery cells within a battery module are arranged in a liquid cooling fluid by which heat can be removed from the cells, e.g. by heat conduction through the liquid or by gravitational or forced convection. The term "fluid" generally refers to a liquid or a gas. In the context of this disclosure, the cooling fluid in the closed container is in its liquid phase and is therefore also referred to as cooling liquid herein. Generally, the cooling liquid is in direct contact with a surface of the immersed battery cells, so that heat can be transferred effectively from the cell to the liquid. In single-phase immersion cooling systems, the cooling fluid remains liquid and does not evaporate. The hot liquid in the vicinity of the battery cell surface is transported to a cooling unit, e.g. a heat exchanger, where it is cooled, and the cooled liquid is brought back to contact the battery cells and can take up heat again.

A battery cell may be completely immersed in the cooling fluid, i.e. in the liquid phase of the cooling fluid.

The cooling fluid is arranged in a closed container, for example in a closed tank. The container may comprise the tubing, pipes, pumps and heat exchangers and/or other elements through which the cooling fluid is circulated in a liquid phase. In operation the entire container, i.e. its entire volume, is completely filled with the cooling fluid in liquid phase.

The container is closed, i.e. it is pressure-tight, so that none of the cooling fluid can escape when pressure in the container rises in normal operation and so that no gases or liquids can enter the container. A container is still considered to be closed even if it has a valve for venting in case of emergency.

The container provides a fixed, constant volume for the cooling fluid, so that a relation between pressure and temperature of the cooling fluid can be determined, such that the temperature of the cooling fluid in the container can be derived from the pressure in the container.

The pressure sensor senses the pressure in the container. The pressure sensor is preferable an absolute pressure sensor. Its precision should be chosen such that a significant rise in temperature, as an indication of the beginning of a thermal runaway event, can be unambiguously identified. For being able to issue a warning signal early, the pressure sensor should have a short reaction time of well below one second. Such a reaction time is within the common performance range of most commercially available pressure sensors. Obviously, the pressure sensor should be interrogated continuously or frequently to avoid delays in warning.

The pressure in the closed container is equal everywhere, therefore the position of the pressure sensor in the closed container is not critical. The pressure determined by the pressure sensor at a given time, referred to as the "instant pressure" herein, therefore is the pressure that prevails in the entire closed container.

Various suitable methods can be utilized for deriving an instant maximum temperature prevailing anywhere in the closed container from the instant pressure prevailing in the closed container. In certain preferred embodiments of the present disclosure, the instant maximum temperature is derived by using vapor pressure information of the cooling fluid.

Vapor pressure information of the cooling fluid can be generated by determining, for a given fixed volume of the closed container and a given fixed volume of the immersed battery cells, the respective pressure in the closed container for each temperature in a temperature range, provided that the closed container contains no other fluids than the cooling fluid in liquid phase. This can be done, for example, before the battery cell single-phase immersion cooling system is assembled. In fact, the respective pressure for each temperature is characteristic for the cooling fluid used and is known as the vapor pressure curve of the cooling fluid.

The vapor pressure curve of the cooling fluid can be determined independently from the actual setup of the immersion cooling system, for example in a laboratory. The curve represents vapor pressure information of the cooling fluid. The same information can be represented in a look-up table, in which for each temperature the corresponding pressure is listed.

For deriving an instant maximum temperature from an instant pressure, the look-up table can be used in reverse mode, i.e. starting from the instant pressure determined by the pressure sensor and looking up the corresponding temperature value from the given pressure. Interpolation may be used to obtain a temperature value from a pressure value that might lie between two adjacent pressure values in the look-up table.

The derived temperature is the highest temperature that is present anywhere in the cooling fluid. Since the battery cells are immersed in the cooling fluid, the highest temperature of the surface of any battery cell is the highest temperature of the cooling fluid.

Hence as soon as a battery cell in the closed container starts overheating, a portion of this cell will become hotter and will soon be the hottest element in the closed container. This hot portion may be referred to as a "hotspot". The cooling fluid near the hotspot will quickly be hotter than the remainder of the cooling fluid and thus define the "instant maximum temperature anywhere in the closed container". According to the vapor pressure curve of the cooling fluid, determined previously, the hot cooling fluid near the hotspot will cause the instant pressure in the closed container to rise instantaneously. The pressure sensor determines the instant pressure. An associated battery cooling control system or battery management system (BMS), which is operationally connected to the pressure sensor, interrogates the pressure sensor, reads the instant pressure and derives the instant maximum temperature from the instant pressure.

The battery management system may then determine that the instant maximum temperature exceeds the predetermined threshold temperature, and may, for example, generate an electrical signal that triggers an audible alarm to the passenger(s) of the electric vehicle, so that they can take appropriate measures or leave the vehicle.

Overheating events will heat up the cooling fluid very quickly. A method according to the present disclosure may thus determine high spikes in the maximum temperature anywhere in the container in order to identify an overheating event. During normal operation, thermal expansion of the cooling fluid may change the pressure in the container at a much slower rate. The container may further comprise an expansion volume, connected to a main compartment of the container by a small-diameter duct. Such a duct would act similarly to a high-pass frequency filter that would allow for steep rises in pressure of the cooling fluid in the main compartment to be detectable, but "absorb" slower rises in pressure, such as those caused by thermal expansion in the operating range of the battery cells.

Experiments or simulations may be performed on a battery module to determine a temperature of the battery module beyond which an overheating event or a thermal runaway event is extremely likely to occur. This predetermined threshold temperature is chosen such that when the instant maximum temperature in the closed container, determined by using the pressure sensor, exceeds the threshold temperature, it is highly likely that an overheating event is about to occur, or that a thermal runaway event is about to occur.

The value of the predetermined threshold temperature will depend much on the mechanical and thermal design of the module and the type of battery cells in it. A suitable threshold temperature for certain types of modules of lithium-ion cells is 100°C or 200°C.

When it is found that the derived instant maximum temperature anywhere in the container exceeds a predetermined threshold temperature, a signal is generated. The signal may indicate an alarm, e.g. indicating an overheating event or a thermal runaway event.

The signal may be an electrical signal, an optical signal, an audible signal, a visible signal, or a haptic signal.

The signal may be generated by, for example, the pressure sensor, by a battery control system to which the pressure sensor is connected and which has vapor pressure information of the cooling fluid stored in it, or by a further device to which the pressure sensor is operationally connected directly or indirectly, and which has vapor pressure information of the cooling fluid stored in it, or which can access vapor pressure information of the cooling fluid, e.g. over a communication connection.

In the method described herein, step b) of deriving from the instant pressure an instant maximum temperature prevailing anywhere in the closed container may be performed by using prestored vapor pressure information of the cooling fluid. Using prestored information is a particularly quick and cost-effective way of providing the vapor pressure information. Vapor pressure information for the cooling fluid can, for example, be generated in calibration trials, potentially a long time before performing a method of identifying an overheating event described herein. This information can be prestored such that it is easily available to the cooling system, so that step b) can be performed quicker and/or more frequently.

It may be advantageous to store the vapor pressure information before performing the steps a) to c). Hence, the method of identifying an overheating event may comprise a further step of pre-storing vapor pressure information of the cooling fluid, this further step being performed before performing step a). This further step may be performed a long time before steps a) to c) are performed to identify an overheating event in a battery cell, e.g. before manufacturing the closed container or before filling the cooling fluid into the closed container.

Many batteries, e.g. many of current batteries in electric vehicles, are managed by a battery management system, also referred to as a "BMS" herein. A battery management system generally is an electronic system that manages a rechargeable battery (typically composed of a few modules, each composed of a few cells), such as by protecting the battery from operating outside its safe operating range, monitoring its state, calculating secondary data, reporting that data, controlling its environment, authenticating it and balancing it. In electric vehicles, the BMS may also control the recharging of the battery by redirecting the recovered energy (e.g. from regenerative braking) back into the battery. The BMS typically communicates with the battery charging infrastructure, a load, a thermal management subsystem and with an emergency shutdown subsystem.

In certain embodiments of the present disclosure step b) of deriving an instant maximum temperature from a pressure is performed in a battery management system, i.e. in a BMS controlling the battery which comprises the immersion-cooled cells to which this disclosure relates.

Deriving the instant maximum temperature in the BMS is advantageous at least because the BMS is normally used to inquire the sensors in a battery immersion cooling system, and thus is connected to the sensors in that system. Also, a BMS is normally equipped with sufficient memory and computing power to contain the necessary data and to perform the necessary calculations to derive temperature from pressure.

The pre-stored vapor pressure information may be stored as a look-up table. Look-up tables can be searched particularly fast. As is common in look-up tables, the look-up table may contain a plurality of pressure values, and for each pressure value a corresponding temperature value. These pressure and temperature values may be obtained in calibration runs, in which instant pressure and instant maximum temperature in the closed container of fixed volume are recorded for a wide range of pressures, and the recorded values then cast into a look-up table.

Hence in certain embodiments of the present disclosure, the pre-stored vapor pressure information of the cooling fluid comprises a look-up table of pressure values and corresponding temperature values, wherein at least one of the temperature values indicates a temperature prevailing in a closed container of a certain fixed volume at a pressure having the value to which the temperature value corresponds.

As an alternative to a look-up table, vapor pressure information can be stored by approximating the vapor pressure curve by a mathematical function and by storing the definition of the function, e.g. its type and its parameters. The function may, for example, accept a pressure value as input and return a temperature value as output. The type of function (e.g. an exponential function, a polynomial function, etc.) and its parameters will normally be specific for the cooling fluid and its thermal properties, as well as for the volume and other properties of the container. The type of function and its parameters may, for example, be obtained in simulations, or in calibration runs, in which data points of instant pressure and instant maximum temperature in the closed container of fixed volume are recorded for a wide range of pressures, and the recorded data points are then approximated by a function of a suitable type, having suitable parameters. For deriving an instant maximum temperature prevailing anywhere in the closed container from an instant pressure value, the pressure value is input to the function, which delivers the instant maximum temperature as output.

The function can be computed on a digital processing unit, e.g. a CPU in a battery management system.

Hence, in certain embodiments, the pre-stored vapor pressure information of the cooling fluid comprises a definition of a function and optionally parameters of the function, which function accepts at least a pressure value as input and provides at least a temperature value as output, wherein the function comprises parameters that are derived from thermal properties, such as vapor pressure properties, of the cooling fluid.

For generating an early alarm in case of an overheating event, it is essential that the instant maximum temperature in the container is sampled frequently, such as every second or every few seconds. According to the present disclosure, temperature sampling is done by pressure sampling and subsequent derivation of a temperature.

Therefore, in certain embodiments of the present disclosure, step a) is performed once every 5 seconds or more frequently, or once every 2 seconds or more frequently, or once every 1 second or more frequently.

An overheating event in a battery cell generates temperatures in the closed container that are considerably higher than normal operating temperatures. The risk of propagation of overheating from one cell to an adjacent cell, such as a thermal runaway event in lithium-ion battery cell modules, becomes considerable when the temperature of a battery cell exceeds 100°C or, with more certainty and more risk, 200°C. Hence an alarm should be triggered when the instant maximum temperature prevailing anywhere in the closed container is higher than 10°C or 200°C.

Therefore, in certain embodiments of the present disclosure, the predetermined threshold temperature is 200°C or higher. In certain other embodiments of the present disclosure, the predetermined threshold temperature is 100°C or higher.

The instant maximum temperature prevailing anywhere in the closed container may fluctuate, while the battery module is operated inside its allowed temperature range, and the temperature may exceed the predetermined threshold temperature for only a short time. In such cases no alarm should be generated. If, however, the instant maximum temperature exceeds the threshold temperature continuously for at least a certain time period, such as for at least one second or a few seconds, on overheating event is likely to be occurring soon, and the alarm should be generated.

Therefore, in certain embodiments of the methods described herein, in step c) the signal is generated when the instant maximum temperature exceeds the predetermined threshold temperature for at least one second, for at least five seconds, or for at least ten seconds.

The cooling fluid is the only fluid in the closed container. Contamination with a second fluid in the closed container is normally not desirable, because a mixture of two fluids may have less favorable cooling properties, such as a different viscosity, a different heat capacity or a different boiling point than the cooling fluid alone. Should the cooling fluid be contaminated by a second fluid present in the container, the step of deriving the instant maximum temperature from the instant pressure may not be as accurate as it would be with an uncontaminated cooling fluid. A calibration that might have yielded vapor pressure information of the uncontaminated cooling fluid is not accurate for a mixture of the cooling fluid and a second fluid in the closed container. A new calibration would need to be run for the mixture of fluids, which would result in a different set of vapor pressure information.

Therefore, in certain preferred embodiments of the present disclosure, the cooling fluid is the only fluid in the closed container.

In single-phase immersion cooling systems for batteries, the cooling fluid is only present in a liquid phase. Single-phase gaseous cooling systems are not considered immersion cooling systems and are not deemed useful for cooling of batteries in electric vehicles today.

According to this disclosure, the present method identifies an overheating event in an EV battery cell single-phase immersion cooling system comprising a cooling fluid consisting of a liquid phase. In such a cooling system, only a liquid phase of the cooling fluid is present in the closed container, and a gaseous phase and other phases are absent, or at least essentially absent. Negligible quantities of a gaseous phase of the cooling fluid in the single-phase cooling system, e.g. below 5% of the volume of the container at the highest normal operating temperature of the system, are not considered sufficient to make the system a two-phase cooling system, especially if these quantities are undesired or undesirable.

Hence in certain embodiments, the cooling fluid consists of a liquid phase. In certain of these embodiments, the cooling fluid consists of a liquid phase at at least one temperature within a range of normal operating temperatures of the cooling system.

Where cells of a battery are single-phase immersion-cooled, the cooling fluid is close to "live" electrical elements, i.e. elements on electrical potential. There is a risk of the cooling fluid leaking out, contacting these electrical elements and causing an electrical short. Dielectric (i.e. electrically insulating) cooling fluids cannot cause electrical shorts when they get in contact with live electrical elements. Hence dielectric cooling fluids are particularly advantageous to use for cooling elements of batteries of electric vehicles. As used herein, the term "dielectric fluids" refers to fluids that have a volume resistivity of 10⁸ Ohm-cm or higher at 25°C.

A suitable dielectric cooling fluid may be chosen from a family of engineered fluids commercially available under the brand name 3M™ Novec™ Engineered Fluids available from 3M Deutschland GmbH, Neuss, Germany. In particular, the variety "Novec™ 7300" is considered a suitable dielectric cooling fluid. Therefore. in certain methods of identifying an overheating event in a battery cell immersion cooling system comprising a cooling fluid in a closed container according to the present disclosure, the cooling fluid is, or comprises, a dielectric fluid, such as a fluid comprising 3M™ Novec™ 7300 fluid.

Certain chemical compositions have found to be suitable cooling fluids, such as certain fluorinated alkenes, and especially fluorinated hydrocarbons. Some materials of these groups are useful cooling fluids due to them being chemically inert and electrically insulating. An example is a fluid comprising methoxytridecafluoroheptene isomer. Hence in certain embodiments of the method according to the present disclosure the cooling fluid is, or comprises, a fluorinated hydrocarbon material, such as a methoxytridecafluoro-heptene isomer.

The present disclosure further provides a battery management system, operationally connectable or operationally connected to a battery cell single-phase immersion cooling system comprising a cooling fluid in a closed container having a fixed volume, one or more battery cells immersed in the cooling fluid, and a pressure sensor for sensing a pressure in the closed container, wherein the battery management system is operable to perform any one of the methods of identifying an overheating event in the cooling system disclosed herein.

The methods according to the present disclosure can be performed by digital (i.e. computerized) devices, e.g. by a digital battery management system. Such a BMS often comprises data storage device, such as a hard disk drive, solid state disk or RAM memory, on which software code is stored that can be loaded into a digital memory of the BMS and can cause, when run, the BMS processor to perform any one of the methods disclosed herein. The present disclosure therefore also provides a data storage device comprising data that are suitable, when loaded into a memory of a data processing unit of a battery management system, to cause the data processing unit to perform any one of the methods disclosed herein.

The disclosure will now be explained in more detail with reference to the following Figures:
- Fig. 1: Cross section of a single-phase immersion cooling system for battery cells; and
- Fig. 2: Vapor pressure diagram of a cooling fluid.

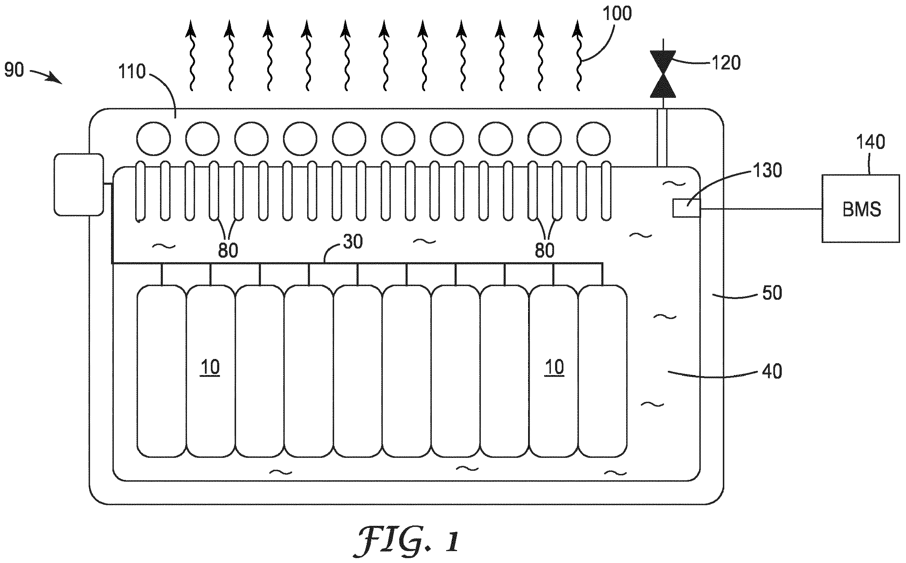

**Figure 1** is a sketched cross section of a single-phase immersion cooling system for battery cells with which the methods of the present disclosure can be used. Ten prismatic lithium-ion battery cells 10 are arranged in a row adjacent to each other, forming a row of battery cells 10. The cells 10 are electrically connected with each other by a busbar 30. The battery cells 10 are completely immersed in a liquid cooling fluid 40, which is contained in a closed tank 50. The tank 50 provides a fixed, invariable volume for the cooling fluid 40. The entire volume of the tank 50 is completely filled with the cooling fluid 40, so that no gas and no other fluid is present in the tank 50.

As the battery cells 10 heat up, they transfer heat to the liquid cooling fluid 40, so that the cooling fluid 40 next to an outer surface of the cells 10 is heated up and moves, by gravitational convection, to fins 80 of a heat exchanger 90. The fins 80 are thermally coupled to a cold plate 110 on the outside of the tank 50, which is cooled by an airflow 100, e.g. through convection. Heat from the battery cells 10 thus heats up the cooling fluid 40 inside the tank 50 and is transferred to the fins 80, and from the fins 80 to the cold plate 110 outside the tank 50. A relief valve 120 allows venting off hot liquid or vapour in case of the pressure in the tank increasing beyond an emergency level.

A pressure sensor 130 is attached to a wall on the inside of the tank 50. It senses the instant pressure prevailing in the tank 50. The pressure sensor 130 is operationally connected to a battery management system (BMS) 140 which interrogates the pressure sensor 130 once every second. The BMS 140 reads the instant vapor pressure prevailing in the tank 50 from the pressure sensor 130 and derives the instant maximum temperature anywhere in the cooling fluid 40 from the instant vapor pressure. For that purpose, a look-up table with vapor pressure information of the cooling fluid 40 is prestored in the BMS 140, containing a list of vapor pressure values and for each vapor pressure value a corresponding temperature value. The temperature value indicates the temperature prevailing in the tank 50 at a vapor pressure having the value to which the temperature value corresponds in the table. The BMS 140 can thus, by looking up in the table and interpolating between listed vapor pressure values, derive the instant maximum temperature anywhere in the cooling fluid 40.

Should any one of the battery cells 10 anywhere in the tank 50 overheat and start a thermal runaway event, the pressure in the tank 50 rises immediately. This surge in pressure would be detected, via the pressure sensor 130, within a second by the BMS 140, which derives the instant maximum temperature anywhere in the cooling fluid 40 from the instant vapor pressure. Should the instant maximum temperature exceed a predetermined threshold temperature, the BMS 140 generates a signal, e.g. an alarm signal, indicating for example that passengers should leave the electric vehicle.

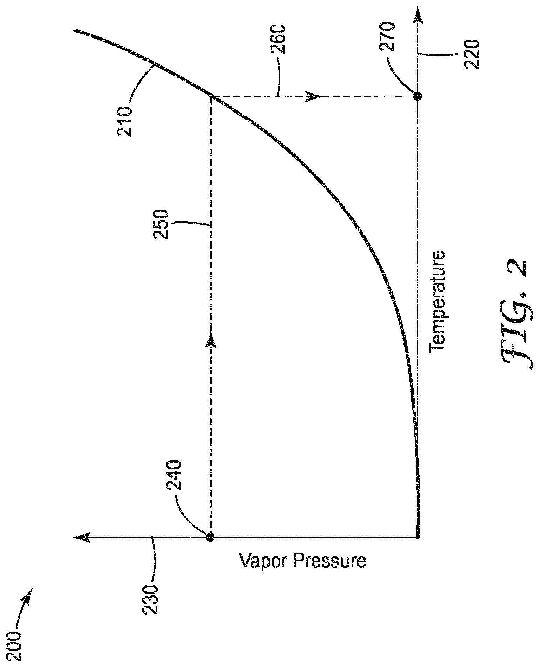

**Figure 2** is an unscaled vapour pressure diagram 200 of a typical immersion cooling fluid 40 in a closed container 50, i.e. a container 50 having a fixed, invariable volume containing the cooling fluid 40. A vapor pressure curve 210 shows the relation between the temperature of the fluid 40, plotted on the x-axis 220, and the corresponding fluid vapor pressure, plotted on the y-axis 230. Each cooling fluid 40 typically has its own vapor pressure curve 210.

A temperature value on the temperature axis 220 refers to the instant maximum temperature prevailing anywhere in the closed container 50.

According to the present disclosure, an instant pressure in the closed container 50 is determined using a pressure sensor 130. The vapor pressure diagram 200 is a means to derive from the instant vapor pressure an instant maximum temperature prevailing anywhere in the closed container 50: Starting from the value 240 of the instant pressure, which is the instant vapor pressure determined by the pressure sensor 130, on the y-axis 230, and following a path 250 parallel to the x-axis 220 up to the vapor pressure curve 210, then following a path 260 parallel to the y-axis 230 towards the x-axis 220, and reading the temperature value 270 on the x-axis 220 allows to derive from the instant pressure the instant maximum temperature prevailing in the closed container 50.

## Claims

1. Method of identifying an overheating event in a battery cell single-phase immersion cooling system (90) comprising a cooling fluid (40) in a closed container (50) having a fixed volume, one or more battery cells (10) immersed in the cooling fluid, and a pressure sensor (130) for sensing a pressure in the closed container,
the method comprising the steps of
a) determining an instant pressure prevailing in the closed container using the pressure sensor;
b) deriving from the instant pressure an instant maximum temperature prevailing anywhere in the closed container; and
c) generating a signal when the instant maximum temperature exceeds a predetermined threshold temperature.

2. Method according to claim 1, wherein step b) is performed by using prestored vapor pressure information of the cooling fluid (40).

3. Method according to claim 2, comprising a further step of pre-storing vapor pressure information of the cooling fluid, this further step being performed before step a).

4. Method according to any one of the preceding claims, wherein step b) is performed in a battery management system (140).

5. Method according to any one of claims 2 to 4, wherein the pre-stored vapor pressure information of the cooling fluid (40) comprises a look-up table of pressure values and corresponding temperature values, wherein at least one of the temperature values indicates a temperature prevailing in a closed container (50) of a certain fixed volume at a pressure having the value to which the temperature value corresponds.

6. Method according to any one of claims 2 to 4, wherein the pre-stored vapor pressure information of the cooling fluid (40) comprises a definition of a function (210) and optionally parameters of the function, which function accepts at least a pressure value (240) as input and provides at least a temperature value (270) as output, wherein the function comprises parameters that are derived from thermal properties, such as vapor pressure properties, of the cooling fluid (40).

7. Method according to anyone of the preceding claims, wherein step a) is performed once every 5 seconds or more frequently, or once every 2 seconds or more frequently, or once every 1 second or more frequently.

8. Method according to anyone of the preceding claims, wherein the predetermined threshold temperature is 200°C or higher.

9. Method according to anyone of the preceding claims, wherein in step c) the signal is generated when the instant maximum temperature exceeds the predetermined threshold temperature for at least one second, for at least five seconds, or for at least ten seconds.

10. Method according to anyone of the preceding claims, wherein the cooling fluid (40) is the only fluid in the container (50).

11. Method according to anyone of the preceding claims, wherein the cooling fluid (40) consists of a liquid phase.

12. Method according to anyone of the preceding claims, wherein the cooling fluid (40) is, or comprises, a dielectric fluid, such as a fluid comprising 3M™ Novec™ 7300 fluid.

13. Method according to anyone of the preceding claims, wherein the cooling fluid (40) is, or comprises, a fluorinated hydrocarbon material, such as a methoxytridecafluoro-heptene isomer.

14. Battery management system (140), operationally connectable or operationally connected to a battery cell single-phase immersion cooling system (90) comprising a cooling fluid (40) in a closed container (50) having a fixed volume, one or more battery cells (10) immersed in the cooling fluid, and a pressure sensor (130) for sensing a pressure in the closed container, wherein the battery management system is operable to perform a method according to any one of claims 1 to 13.

15. Data storage device comprising data that are suitable, when loaded into a memory of a data processing unit of a battery management system (140), to cause the data processing unit to perform a method according to any one of claims 1 to 13.
